**Europäisches Patentamt**

**European Patent Office**

**Office européen des brevets**

(11) Veröffentlichungsnummer: **0 471 240 A2**

(12) **EUROPÄISCHE PATENTANMELDUNG**

(21) Anmeldenummer: **91112848.6**

(22) Anmeldetag: **31.07.91**

(51) Int. Cl.5: **F16C 3/02**

(30) Priorität: **16.08.90 DE 4025958**

(43) Veröffentlichungstag der Anmeldung:
**19.02.92 Patentblatt 92/08**

(84) Benannte Vertragsstaaten:
**DE FR GB IT SE**

(71) Anmelder: **ELASTOGRAN KUNSTSTOFF-TECHNIK GMBH**
**Landwehrweg**
**W-2844 Lemförde(DE)**

(72) Erfinder: **Schuermann, Helmut**
**Burgunder Strasse 13**
**W-6701 Maxdorf(DE)**
Erfinder: **Kasper, Dietmar**
**Kurzweil 8**
**W-6700 Ludwigshafen(DE)**

(74) Vertreter: **Karau, Wolfgang, Dr. et al**
**BASF Aktiengesellschaft Carl-Bosch-Strasse 38**
**W-6700 Ludwigshafen(DE)**

(54) **Hohlwelle aus faserverstärktem Kunststoff.**

(57) Die Hohlwelle besteht aus aus einem rohrförmigen, aus gewickelten Faserlagen aufgebauten Wellenteil (1) mit an den Enden dauerhaft festgelegten Anschlußmitteln (2). Zwecks Erhöhung der kritischen Drehzahl ist das Wellenteil zumindest annähernd parabolisch bombiert. Die Bombage wird durch einen entsprechend geformten Kern (3, 4, 5, 6) erreicht, der entweder zwischen zwei Fasernlagen (7, 8) eingebettet ist oder den inneren Mantel des Wellenteils bildet.

Die Erfindung betrifft eine Hohlwelle aus faserverstärktem Kunststoff entsprechend dem Oberbegriff des Anspruchs 1.

Antriebswellen aus Faserkunststoffverbunden sind für die Automobilindustrie in vielerlei Hinsicht interessant. Sie besitzen alle Eigenschaften, die sie als Ersatz von Stahl- oder Aluminiumwellen sinnvoll erscheinen lassen. Ihre besonderen Vorteile liegen in der Gewichtsersparnis, der Korrosionsfreiheit und den gegenüber Metallwellen besseren akustischen Eigenschaften.

Aufgrund des großen Verhältnisses von Elastizitätsmodul zu Dichte können mit solchen Wellen auch höhere kritische Drehzahlen erreicht werden, als mit Metallwellen gleicher Abmessungen. Dies gilt insbesondere für Wellen aus hochsteifen Kohlenstoffasern. Nachteilig ist indes der hohe Preis von Kohlenstoffasern, so daß sich solche Wellen in der Praxis bisher nicht durchsetzen konnten. Hohlwellen aus glasfaserverstärkten Kunststoffen sind zwar preisgünstiger, jedoch lassen sich ohne zusätzliche Vorkehrungen kaum höhere kritische Drehzahlen erreichen.

Aufgabe der Erfindung ist es, eine Hohlwelle der eingangs definierten Art unter Berücksichtigung wirtschaftlicher Gesichtspunkte hinsichtlich der kritischen Drehzahl zu verbessern.

Zur Lösung dieser Aufgabe werden die Maßnahmen nach dem Kennzeichen des Anspruchs 1 vorgeschlagen.

Erfindungsgemäß wird die kritische Drehzahl einer Hohlwelle bzw. Antriebswelle durch Vergrößerung des Wellendurchmessers erhöht. Hierzu ist das an seinen Enden vorgefertigte Anschlußmittel aufweisende Wellenteil zumindest annähernd parabolisch bombiert. Im allgemeinen ist nur die Außenkontur des Wellenteils bombiert, während die innere Mantelfläche zylinderförmig ausgebildet ist. In diesem Fall besitzt das Wellenteil an der Stelle seines größten Durchmessers auch seine größte Wanddicke. Es ist jedoch auch denkbar, das Wellenteil mit über seine gesamte Länge gleichbleibender Wanddicke auszuführen, d.h. sowohl den Innenmantel als auch den Außenmantel entsprechend zu verwölben.

Besonders günstig ist es, den größten Wellendurchmesser in der Mitte zwischen den Anschlüssen vorzusehen, da hier aufgrund der Fliehkräfte die höchste Biegemomentbelastung wirkt und eine Erhöhung der Biegesteifigkeit der Welle sich am effektivsten auf die Erhöhung der kritischen Drehzahl auswirkt. Dabei ist es nicht unbedingt erforderlich, den Durchmesser der Welle über die Länge kontinuierlich zu verändern, sondern es ist vorstellbar, daß örtlich die Welle wieder auf einen kleineren Durchmesser eingezogen wird, z.B. wenn Gefahr besteht, daß vorstehende Teile in der näheren Umgebung der Welle bei geringfügigen Schwingungen der Welle berührt werden.

Die Bombage wird durch einen entsprechend geformten Kern gebildet, welcher unmittelbar auf einen Wickeldorn aufgebracht werden kann. Gegebenenfalls ist der Wickeldorn verzichtbar, wenn der Kern ausreichend steif ist. Auf den Kern werden die eigentlichen, die Torsionsmomente übertragenden Faserverbundschichten aufgetragen. Es kann der Kern aber auch zwischen zwei Faserverbundschichten eingebettet sein. Hierzu werden zunächst Faserverbundschichten auf einen glatten Wickeldorn aufgebracht und auf diesen der zweckmäßigerweise aus Halbschalen bestehende Kern fixiert. Mit dem anschließenden Aufwickeln weiterer Faserverbundschichten entsteht ein Wellenteil mit deutlich gesteigerter Belastbarkeit. Von Vorteil sind insbesondere die verbesserten Tragfestigkeiten einer solchen Welle bei Längsdruckbelastung sowie die Anhebung der Torsionsbeulgrenze, da der Kern im Gesamtverbund stützend wirkt. Die Dicke der Faserverbundschichten ist ausschließlich auf die Übertragung des Torsionsmomentes auszulegen. Eine Erhöhung der Wanddicke des Wellenteils zwecks Vermeidung des Torsionsbeulens erübrigt sich. Da die Erhöhung der kritischen Drehzahl im wesentlichen durch die Vergrößerung des Durchmessers im mittleren Teil der Antriebswelle erreicht wird, können die Wellenenden an gegebene Platzverhältnisse oder an vorgegebene Krafteinleitungselemente leicht angepaßt werden, ohne daß zusätzliche Übergangsstücke zwischen diesen und den Anschlußmitteln eingefügt werden müssen. Die erfindungsgemäße Hohlwelle ist einfach herzustellen, und es lassen sich in erheblichem Umfang Materialkosten einsparen.

Zweckmäßige Weiterbildungen der Hohlwelle nach der Erfindung sind Gegenstand der Ansprüche 2 bis 6.

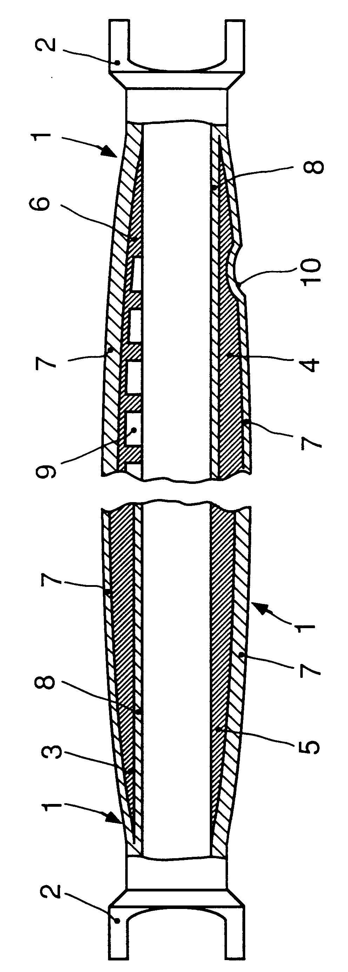

Die Erfindung wird nachfolgend unter Hinweis auf die Zeichnung anhand verschiedener Ausführungsbeispiele näher erläutert.

Im wesentlichen besteht die Hohlwelle aus einem mittels Fasern verstärkten Wellenteil (1) aus Kunststoff, das an seinen beiden Enden drehmomentübertragende Anschlußmittel (2) enthält. Die Außenkontur des Wellenteils ist parabolisch bombiert. Mit (3), (4), (5) und (6) sind die Bombage bildende Kerne bezeichnet, von denen die Kerne (3) und (4) zwischen zwei Faserlagen (7, 8) eingebettet sind und die Kerne (5) und (6) jeweils den inneren Mantel des Wellenteils (1) darstellen. Der Kern (6) enthält mehrere in Längsrichtung nebeneinander angeordnete koaxiale Nuten (9), durch die nur eine vergleichweise kleinflächige Abstützung auf dem Wickeldorn (in der Zeichnung nicht dargestellt) erfolgt. Hierdurch ergibt sich eine zusätzliche Gewichtsersparnis. Auf der äußeren Mantelfläche des Wellenteils (1) bzw. des Kerns (4) können schließlich eine oder mehrere Vertiefungen (10) in umfänglich gleichmäßiger Verteilung vorgesehen sein.

Das rohrförmige Wellenteil (1) ist nach an sich bekannten Verfahren hergestellt, indem mit durch Strahlung oder Temperaturerhöhung härtbaren Kunststoffen oder mit thermoplastischen Kunststoffen getränktes Fasermaterial auf einen Dorn aufgewickelt wird.

Als durch Strahlung oder Temperaturerhöhung härtbare Kunststoffe können alle Kunstharze verwendet werden, die durch freie Radikale vernetzt werden können, wie z.B. ungesättigte Polyesterharze, Vinylesterharze, modifizierte Epoxyharze, modifizierte Polyurethanharze oder Mischungen dieser Harze. Außerdem können mit Erfolg auch Gemische dieser Harze mit damit mischpolymerisierbaren ungesättigten Monomeren verwendet werden.

Geeignete thermoplastische Kunststoffe sind beispielsweise Olefinpolymerisate, wie Polyethylen oder Polypropylen, insbesondere die eine hohe Wärmeformbeständigkeit und Säurefestigkeit aufweisenden aromatischen Polyether und Polythioether, wie Polyphenylenether, Polysulfon, Polyethersulfon, Polyetherimid, Polyetherketon oder Polyphenylensulfid sowie Mischungen dieser Polymerisate.

Als Fasermaterialien kommen strang- oder bandförmige Gebilde aus natürlichen und synthetischen organischen Fasern, wie z.B. Aramid, Polyamid-, Polyesterfasern und dergleichen sowie aus anorganischen Fasern, z.B. Glasfasern, Kohlenstoffasern usw. in Betracht. Unter diesen sind Glasfasern besonders bevorzugt. Die Glasfasern sind mit üblichen Schlichten behandelt, die z.B. einen Haftvermittler auf Silan- oder Chrombasis enthalten.

Das Fasermaterial ist mehr oder weniger stark zur Achse des rohrförmigen Wellenteils geneigt orientiert. Im allgemeinen beträgt der Wickelwinkel etwa ± 12° bis etwa ± 45°. Bei diesen Wickelwinkeln ergeben sich genügend hohe Torsionsfestigkeiten und genügend hohe Längsbiegesteifigkeiten.

Der Kern besteht vorzugsweise aus einem geschäumten Kunststoff, z.B. aus einem Hartschaum aus Polyurethan, einer niedrigschmelzenden Metallegierung, insbesondere Wismutlegierung, oder einem Salz.

**Patentansprüche**

1. Hohlwelle aus faserverstärktem Kunststoff, insbesondere Antriebswelle für Kraftfahrzeuge mit einem rohrförmigen, aus gewickelten Faserlagen aufgebauten Wellenteil und vorgefertigten, an den Enden des Wellenteils dauerhaft festgelegten Anschlußmitteln, dadurch gekennzeichnet, daß das rohrförmige Wellenteil (1) zumindest annähernd parabolisch bombiert ist, wobei die Bombage durch einen entsprechend geformten Kern (3, 4, 5, 6) gebildet wird.

2. Hohlwelle nach Anspruch 1, dadurch gekennzeichnet, daß der Kern (3, 4, 5, 6) aus geschäumten Kunststoffen, niedrigschmelzenden Metallegierungen, Salzen u. dgl. besteht.

3. Hohlwelle nach Anspruch 1 dadurch gekennzeichnet, daß der Kern (3, 4) zwischen zwei Faserlagen (7, 8) eingebettet ist.

4. Hohlwelle nach Anspruch 1, dadurch gekennzeichnet, daß der Kern (5, 6) den inneren Mantel des Wellenteils (1) bildet.

5. Hohlwelle nach Anspruch 1, dadurch gekennzeichnet, daß der Kern (6) mehrere Nuten (9) enthält.

6. Hohlwelle nach einem oder mehreren der vorstehenden Ansprüche, dadurch gekennzeichnet, daß die äußere Mantelfläche des Wellenteils (1) Vertiefungen (10) in umfänglich gleichmäßiger Verteilung aufweist.